# FASCICULE DE BREVET EUROPEEN

(11) **EP 3 131 761 B1**
(45) Date de publication et mention de la délivrance du brevet: **28.02.2018**
(21) Numéro de dépôt: 15716070.6
(22) Date de dépôt: 17.04.2015
(51) Int. Cl.: B60C 9/00, B60C 9/18, B60C 9/28, B60C 9/20, B60C 9/26

(54) **ARMATURE DE SOMMET DE PNEUMATIQUE POUR AVION**
GÜRTELVERSTÄRKUNG FÜR EINEN FLUGZEUGREIFEN
CROWN REINFORCEMENT FOR AN AIRPLANE TYRE

(30) Priorité: 18.04.2014 FR 1453527
(43) Date de publication de la demande: 22.02.2017
(73) Titulaire: Compagnie Générale des Etablissements Michelin, 63000 Clermont-Ferrand (FR)
(72) Inventeur: ESTENNE, Vincent, 63040 Clermont-Ferrand Cedex 9 (FR); JOULIN, Emmanuel, 63040 Clermont-Ferrand Cedex 9 (FR)
(74) Mandataire: Millanvois, Patrick Jacques Jean
(86) Numéro de dépôt international: PCT/EP2015/058345
(87) Numéro de publication internationale: WO 2015/158873

(56) Documents cités:
- WO-A1-02/085646
- WO-A1-2011/054949

## Description

La présente invention concerne un pneumatique pour avion et, en particulier, une armature de sommet de pneumatique pour avion.

Dans ce qui suit, les directions circonférentielle, axiale et radiale désignent respectivement une direction tangente à la surface de roulement du pneumatique selon le sens de rotation du pneumatique, une direction parallèle à l'axe de rotation du pneumatique et une direction perpendiculaire à l'axe de rotation du pneumatique. Par «radialement intérieur, respectivement radialement extérieur», on entend «plus proche, respectivement plus éloigné de l'axe de rotation du pneumatique». Par «axialement intérieur, respectivement axialement extérieur», on entend «plus proche, respectivement plus éloigné du plan équatorial du pneumatique», le plan équatorial du pneumatique étant le plan passant par le milieu de la surface de roulement du pneumatique et perpendiculaire à l'axe de rotation du pneumatique.

De façon générale, un pneumatique comprend une bande de roulement, destinée à venir en contact avec un sol par l'intermédiaire d'une surface de roulement, la bande de roulement étant reliée par deux flancs à deux bourrelets, les deux bourrelets étant destinés à assurer une liaison mécanique du pneumatique avec une jante sur laquelle le pneumatique est monté.

Un pneumatique radial pour avion comprend plus particulièrement une armature de carcasse radiale et une armature de sommet, telles que décrites, par exemple, dans le document EP 1381525.

L'armature de carcasse radiale est la structure de renforcement du pneumatique reliant les deux bourrelets du pneumatique. L'armature de carcasse radiale d'un pneumatique pour avion comprend généralement au moins une couche de carcasse, chaque couche de carcasse étant constituée de renforts le plus souvent textiles, enrobés dans un matériau polymérique de type élastomère ou mélange élastomérique, parallèles entre eux et formant, avec la direction circonférentielle, un angle compris entre 80° et 100°.

L'armature de sommet est la structure de renforcement du pneumatique radialement intérieure à la bande de roulement et au moins en partie radialement extérieure à l'armature de carcasse radiale. L'armature de sommet d'un pneumatique pour avion comprend généralement au moins une couche de sommet, chaque couche de sommet étant constituée de renforts parallèles entre eux et enrobés dans un matériau polymérique de type élastomère ou mélange élastomérique. Parmi les couches de sommet, on distingue usuellement les couches de travail, composant l'armature de travail et constituées le plus souvent de renforts textiles, et les couches de protection, composant l'armature de protection, constituées de renforts métalliques ou textiles, et disposées radialement à l'extérieur de l'armature de travail. L'armature de travail conditionne le comportement mécanique global de l'armature de sommet, alors que l'armature de protection protège essentiellement les couches de travail des agressions susceptibles de se propager à travers la bande de roulement radialement vers l'intérieur du pneumatique.

En outre, l'armature de sommet d'un pneumatique pour avion peut comprendre une armature de frettage, comprenant au moins une couche de frettage comprenant des renforts le plus souvent textiles, enrobés dans un matériau élastomérique, et sensiblement circonférentiels, c'est-à-dire formant, avec la direction circonférentielle du pneumatique, un angle au plus égal à 5°. L'armature de frettage est une armature de renforcement généralement centrée sur le plan équatorial du pneumatique. Une couche de frettage peut avoir différentes positions selon la direction radiale : elle peut être radialement intérieure à l'armature de travail, c'est-à-dire à toute couche de travail, ou radialement extérieure à l'armature de travail, c'est-à-dire à toute couche de travail, ou radialement intercalée entre deux couches de travail consécutives. Une armature de frettage, telle que précédemment décrite, garantit une rigidité circonférentielle élevée dans la portion équatoriale du pneumatique, et, par conséquent, un bonne maîtrise des déformations radiales du pneumatique dues à la centrifugation.

Les renforts textiles des couches de carcasse et des couches de sommet sont le plus souvent des câbles constitués de filés de filaments textiles, préférentiellement en polyamide aliphatique ou en polyamide aromatique. Les propriétés mécaniques en extension, telles que le module d'élasticité, l'allongement à rupture et la force à rupture des renforts textiles, sont mesurées après un conditionnement préalable. Par "conditionnement préalable", on entend le stockage des renforts textiles pendant au moins 24 heures, avant mesure, dans une atmosphère standard selon la norme européenne DIN EN 20139 (température de 20 ± 2°C, hygrométrie de 65 ± 2%). Les mesures sont réalisées de manière connue à l'aide d'une machine de traction ZWICK GmbH & Co (Allemagne) de type 1435 ou de type 1445. Les renforts textiles subissent une traction sur une longueur initiale de 400 mm à une vitesse nominale de 200 mm/min. Tous les résultats sont une moyenne de 10 mesures.

Lors de la fabrication d'un pneumatique pour avion, et plus précisément lors de l'étape de pose de l'armature de travail, une couche de travail est le plus souvent obtenue par un enroulement circonférentiel en zigzag d'une bandelette, sur une surface cylindrique de pose ayant pour axe de révolution l'axe de rotation du pneumatique. La couche de travail est alors constituée par la juxtaposition de portions de bandelette jointives.

Par enroulement circonférentiel en zigzag d'une bandelette, on entend un enroulement de la bandelette, selon la direction circonférentielle, et selon une courbe périodique, c'est-à-dire une courbe formée d'ondulations périodiques oscillant entre des extrema. Enrouler une bandelette selon une courbe périodique signifie que la ligne moyenne de la bandelette, équidistante des bords de la bandelette, coïncide avec la courbe périodique. Dans le cas d'un enroulement circonférentiel en zigzag, la ligne moyenne de la bandelette forme, avec la direction circonférentielle du pneumatique et dans le plan équatorial du pneumatique, un angle au moins égal à 8° et au plus égal à 30°. En d'autres termes, les renforts constitutifs de chaque couche de travail forment, avec la direction circonférentielle du pneumatique et dans le plan équatorial du pneumatique, un angle au moins égal à 8° et au plus égal à 30°. Une telle armature de travail comprenant des binappes de travail obtenus par un enroulement circonférentiel en zigzag d'une bandelette a été décrite dans les documents EP 0240303, EP 0850787, EP 1163120 et EP 1518666.

Lors d'un enroulement circonférentiel en zigzag d'une bandelette, les couches de travail sont posées par paire, chaque paire de couches de travail constituant un binappe de travail. Ainsi un binappe de travail est constitué, en zone courante, c'est-à-dire en dehors de ses extrémités axiales, par deux couches de travail radialement superposées. Au niveau de ses extrémités axiales, un binappe de travail comprend généralement plus de deux couches de travail radialement superposées. On appelle surépaisseur d'extrémité axiale le nombre de couches de travail supplémentaires, selon la direction radiale, par rapport aux deux couches de travail de la zone courante du binappe de travail. Cette surépaisseur d'extrémité axiale est générée par les croisements de la bandelette, en extrémité de binappe de travail, à chaque tour d'enroulement en zigzag.

Concernant la pose de l'armature de frettage, une couche de frettage est le plus souvent obtenue par un enroulement circonférentiel en spires d'une bandelette, sur une surface cylindrique de pose ayant pour axe de révolution l'axe de rotation du pneumatique. La couche de frettage est alors constituée par la juxtaposition de portions de bandelette jointives.

Par enroulement circonférentiel en spires d'une bandelette, on entend un enroulement de la bandelette, selon la direction circonférentielle, et selon une hélice ayant un rayon égal au rayon de la surface cylindrique de pose et un angle moyen, par rapport à la direction circonférentielle, compris entre 0° et 5°. La couche de frettage ainsi obtenue par un enroulement en spires est dite circonférentielle, car l'angle des renforts textiles deux à deux parallèles de la bandelette, formé dans le plan équatorial avec la direction circonférentielle, est compris entre 0° et 5°.

La bandelette, constitutive d'une couche de travail ou d'une couche de frettage, est généralement constituée d'au moins un renfort textile continu enrobé dans un mélange élastomérique et, le plus souvent, d'une juxtaposition de renforts textiles continus, enrobés dans un mélange élastomérique et parallèles entre eux.

L'avantage d'avoir un enroulement circonférentiel en zigzag, pour une couche de travail, ou un enroulement circonférentiel en spires, pour une couche de frettage, est d'éviter, au niveau des extrémités axiales desdites couches de travail ou de frettage, la présence d'extrémités de renforts libres, susceptibles de générer des fissures dans ces zones et, par conséquent, de diminuer l'endurance de l'armature de sommet et la durée de vie du pneumatique.

Concernant l'armature de travail, il est toutefois connu que les surépaisseurs d'extrémités axiales des binappes de travail, et, en particulier, celles du binappe de travail ayant la plus grande largeur axiale, sont sensibles à l'apparition de dommages d'endurance, telles que des fissures pouvant évoluer vers une dégradation significative de l'armature de travail et, le cas échéant, entraîner une réduction de la durée de vie du pneumatique.

En effet, dans les surépaisseurs d'extrémités axiales et à leur voisinage, les sollicitations thermomécaniques sont très élevées, lors de l'écrasement et du roulage du pneumatique, dans les conditions d'usage d'un avion. Par exemple et de façon non limitative, un pneumatique d'avion de ligne peut être soumis à une pression nominale supérieure à 15 bars, une charge nominale supérieure à 20 tonnes et une vitesse maximale de 360 km/h. Il en résulte une dissipation thermique importante et donc un niveau de température élevé susceptible de limiter la performance du pneumatique en endurance.

La performance en endurance d'un pneumatique pour avion est généralement mesurée sur un test de qualification élémentaire, tel que le test TSO (Technical Standard Order) imposé par une norme FAA (Fédéral Aviation Administration).

Le test TSO est un test réalisé sur volant qui se décompose en 4 phases:
- 50 cycles de décollage de l'avion, dans lesquels le pneumatique est soumis à la pression nominale Pᵥ et à une charge variant entre la charge nominale Zₙ et 0.
- 8 cycles de roulage taxi de l'avion, dans lesquels le pneumatique est soumis à la pression nominale Pᵥ, à la charge nominale Zₙ et à une vitesse d'environ 65 km/h pendant environ 10700 m.
- 2 cycles de roulage taxi de l'avion, dans lesquels le pneumatique est soumis à la pression nominale Pᵥ, à 1,2 fois la charge nominale Zₙ et à une vitesse d'environ 65 km/h pendant environ 10700 m.
- 1 cycle de décollage de l'avion surchargé dans lequel le pneumatique est soumis à la pression nominale Pᵥ et à une charge variant entre 1,5 fois la charge nominale Zₙ et 0.

L'objectif du test TSO est de réaliser tous les cycles sans dommage pour le pneumatique, le déchapage du pneumatique, c'est-à-dire la perte de la bande de roulement, étant toutefois permis au cours du dernier cycle, mais pas la perte de pression.

Il existe des solutions connues de l'homme du métier pour réduire la température au niveau des extrémités axiales de l'armature de travail, chacune d'elles pouvant présenter des inconvénients :
- utilisation d'un mélange élastomérique à basse hystérèse pour la bande de roulement, ce type de mélange étant le plus souvent sensible à l'abrasion et donc susceptible d'accélérer l'usure de la bande de roulement;
- utilisation d'un mélange élastomérique à basse hystérèse pour un premier composant intermédiaire, axialement intérieur à la bande de roulement et axialement extérieur à l'armature de protection, mais avec un risque de décohésion entre ledit premier composant intermédiaire et la bande de roulement, dans des conditions d'utilisation sévères, en particulier lors du test TSO;
- optimisation du profil géométrique d'un deuxième composant intermédiaire, axialement intérieur à l'armature de protection et axialement extérieur à l'armature de travail, mais pouvant entraîner une apparition prématurée dudit deuxième composant intermédiaire à la surface de la bande de roulement, lors de l'usure de la bande de roulement, d'où un risque d'usure accélérée de la bande de roulement ;
- utilisation de renforts circonférentiels pour les couches de travail, c'est-à-dire de renforts formant un angle nul avec la direction circonférentielle, ce qui peut entraîner une baisse de rigidité de dérive du pneumatique et une moins bonne maîtrise de son profil gonflé centrifugé.

Le document WO2011/054949-A1 divulgue une pneumatique pour avion selon le préambule de la revendication 1.

Les inventeurs se sont donnés pour objectif d'améliorer l'endurance de l'armature de travail d'un pneumatique pour avion, en diminuant les sollicitations thermomécaniques au niveau des surépaisseurs d'extrémités axiales des binappes de travail, constitutifs de l'armature de travail.

Cet objectif a été atteint, selon l'invention, par un pneumatique pour avion, comprenant:
- une armature de travail radialement intérieure à une bande de roulement et radialement extérieure à une armature de carcasse,
- l'armature de travail comprenant au moins un binappe de travail, constitué au moins en partie de deux couches de travail radialement superposées,
- chaque couche de travail comprenant des renforts, enrobés dans un matériau élastomérique, positionnés circonférentiellement selon une courbe périodique et formant, avec la direction circonférentielle du pneumatique et dans le plan équatorial du pneumatique, un angle au moins égal à 8° et au plus égal à 30°,
- le binappe de travail ayant la plus grande largeur axiale comprenant deux extrémités axiales, correspondant chacune au point le plus axialement extérieur et le plus radialement intérieur du binappe de travail,
- l'armature de carcasse comprenant au moins une couche de carcasse comprenant des renforts, enrobés dans un matériau élastomérique, formant, avec la direction circonférentielle du pneumatique, un angle au moins égal à 80° et au plus égal à 100°,
- une armature de frettage, comprenant au moins une couche de frettage comprenant des renforts, enrobés dans un matériau élastomérique, formant, avec la direction circonférentielle du pneumatique, un angle au plus égal à 5°,
- au moins une couche de frettage étant radialement intérieure au binappe de travail ayant la plus grande largeur axiale, et ayant une largeur axiale au moins égale à 0.8 fois la largeur axiale du binappe de travail ayant la plus grande largeur axiale,
- la distance D entre une extrémité axiale du binappe de travail ayant la plus grande largeur axiale et sa projection orthogonale sur la couche de carcasse la plus radialement extérieure étant au moins égale à 7 mm et la distance D' entre le point du binappe de travail ayant la plus grande largeur axiale, axialement intérieur à l'extrémité axiale à une distance L égale à 25 mm, et sa projection orthogonale sur la couche de carcasse la plus radialement extérieure étant au moins égale à 4 mm et au plus égale à la distance D.

Selon l'invention, l'extrémité axiale du binappe de travail ayant la plus grande largeur axiale, c'est-à-dire le point le plus axialement extérieur dudit binappe de travail, et le point dudit binappe de travail, positionné axialement à l'intérieur de ladite extrémité axiale à une distance L égale à 25 mm, sont positionnés radialement à l'extérieur de la couche de carcasse la plus radialement extérieure à des distances respectives D et D'au moins égales à des valeurs minimales. La distance D entre l'extrémité axiale du binappe de travail ayant la plus grande largeur axiale et sa projection orthogonale sur la couche de carcasse la plus radialement extérieure est au moins égale à 7 mm. La distance D' entre le point du binappe de travail ayant la plus grande largeur axiale, axialement intérieur à l'extrémité axiale à une distance L égale à 25 mm, et sa projection orthogonale sur la couche de carcasse la plus radialement extérieure est d'une part au moins égale à 4 mm et d'autre part au plus égale à la distance D.

Ces distances minimales, supérieures à celles généralement constatées sur un pneumatique de l'état de la technique, permettent d'obtenir un profil géométrique de l'extrémité du binappe de travail ayant la plus grande largeur axiale plus éloigné de l'armature de carcasse que pour un pneumatique de l'état de la technique. Ce profil géométrique, dit relevé au niveau de l'extrémité axiale, permet de réduire les sollicitations thermomécaniques cycliques en extrémité axiale du binappe de travail, et, corrélativement, la température dans cette zone: ce qui permet d'améliorer l'endurance de l'armature de travail et d'augmenter la durée de vie du pneumatique.

La distance D entre une extrémité axiale du binappe de travail ayant la plus grande largeur axiale et sa projection orthogonale sur la couche de carcasse la plus radialement extérieure est avantageusement au plus égale à 16 mm. Cette valeur maximale réduit le risque d'apparition de l'extrémité axiale du binappe de travail, à la surface du pneumatique, en cas d'usure de la portion d'extrémité axiale, ou épaule, de la bande de roulement.

Les renforts des couches de travail de tout binappe de travail sont préférentiellement constitués d'un matériau textile. Le textile garantit un bon compromis entre la masse et la résistance à rupture des renforts. L'utilisation de renforts textile pour tout binappe de travail, c'est-à-dire pour toutes les couches de travail, permet une contribution significative à la minimisation de la masse du pneumatique, et donc au gain en charge utile de l'avion. Parmi les renforts textile couramment utilisés dans les pneumatiques pour avion, on distingue les renforts constitués par un polyamide aliphatique, tel que le nylon, et les renforts constitués d'un polyamide aromatique, tel que l'aramide. Les renforts en polyamide aromatique présentent un compromis entre la masse et la résistance à rupture meilleur que celui des renforts en polyamide aliphatique.

Selon un mode de réalisation préféré, les renforts des couches de travail d'au moins le binappe de travail ayant la plus grande largeur axiale sont avantageusement des renforts hybrides, constitués d'une combinaison d'un polyamide aliphatique et d'un polyamide aromatique. Le binappe de travail ayant la largeur axiale la plus large a les extrémités axiales les plus mécaniquement sollicitées, d'où l'intérêt d'utiliser, pour les couches de travail de ce binappe de travail, des renforts hybrides qui présentent à la fois les avantages d'un polyamide aliphatique et ceux d'un polyamide aromatique : résistance à rupture élevée, déformabilité en traction élevée et masse faible.

Les renforts des couches de frettage sont avantageusement des renforts comprenant un polyamide aromatique. Ils sont même souvent constitués d'un seul polyamide aromatique tel que l'aramide. Les renforts en polyamide aromatique présentent un bon compromis entre une masse faible et une résistance à rupture élevée.

Le pneumatique comprend usuellement une armature de protection comprenant au moins une couche de protection, radialement extérieure à l'armature de travail et dont la fonction est de protéger l'armature de travail contre les agressions mécaniques de la bande de roulement.

Au moins une couche de protection comprend préférentiellement des renforts métalliques, enrobés dans un matériau élastomérique. L'intérêt d'avoir des renforts métalliques, au lieu de renforts textiles comme dans les couches de travail ou de frettage, est de garantir une protection efficace de l'armature de travail contre les FOD (Foreign Object Damage). Ces renforts sont généralement ondulés selon la direction circonférentielle.

Les caractéristiques et autres avantages de l'invention seront mieux compris à l'aide des figures 1 à 5 suivantes, non représentées à l'échelle :
- Figure 1 : demi-vue en coupe du sommet d'un pneumatique pour avion de l'état de la technique, dans un plan radial (YZ) passant par l'axe de rotation (YY') du pneumatique.
- Figure 2 : demi-vue en coupe du sommet d'un pneumatique pour avion selon l'invention, dans un plan radial (YZ) passant par l'axe de rotation (YY') du pneumatique.
- Figure 3 : vue détaillée en coupe de l'extrémité axiale de l'armature de travail d'un pneumatique pour avion selon l'invention, dans un plan radial (YZ) passant par l'axe de rotation (YY') du pneumatique.
- Figure 4 : vue en perspective d'une bandelette, constitutive d'un binappe de travail d'un pneumatique pour avion, enroulée circonférentiellement en zigzag, selon une courbe périodique, sur une surface cylindrique de pose.
- Figure 5 : vue développée d'une bandelette, constitutive d'un binappe de travail d'un pneumatique pour avion, enroulée circonférentiellement en zigzag, selon une courbe périodique, après la pose d'une période.

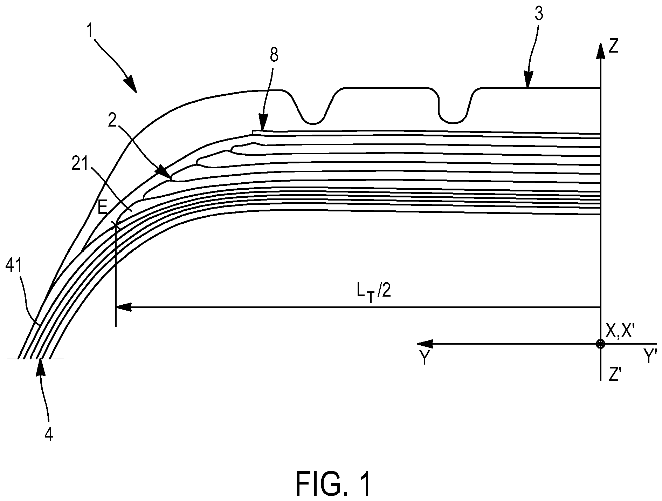

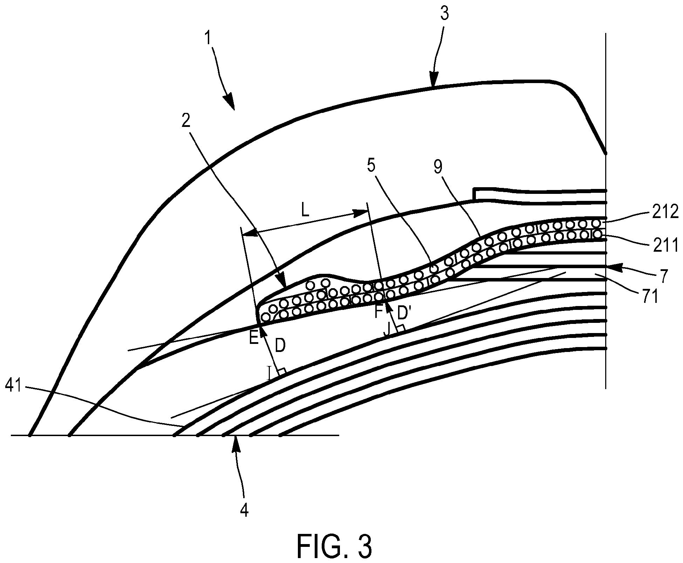

La figure 1 représente, dans un plan radial YZ passant par l'axe de rotation YY' du pneumatique, une demi-vue en coupe du sommet d'un pneumatique 1 pour avion de l'état de la technique, comprenant une armature de travail 2 radialement intérieure à une bande de roulement 3 et radialement extérieure à une armature de carcasse 4. Dans l'exemple présenté, l'armature de travail 2 comprend cinq binappes de travail 21, le binappe de travail le plus radialement intérieur ayant la plus grande largeur axiale L_{T}, mesurée entre ses deux extrémités axiales. Sur la figure 1, seule une demi-largeur L_{T}/2, entre une extrémité axiale E du binappe de travail 21 le plus radialement intérieur et le plan équatorial XZ, est représentée. Chaque binappe de travail 21 est constitué au moins en partie de deux couches de travail (211, 212) radialement superposées (voir sur la figure 3). Chaque couche de travail (211, 212) comprend des renforts textiles de type polyamide aliphatique, enrobés dans un matériau élastomérique. L'armature de carcasse 4 comprend une superposition radiale de couches de carcasse 41. Chaque couche de carcasse 41 comprend des renforts textiles de type polyamide aliphatique, enrobés dans un matériau élastomérique, et formant, avec la direction circonférentielle XX' du pneumatique, un angle au moins égal à 80° et au plus égal à 100°. En outre, radialement à l'intérieur de la bande de roulement 3, le pneumatique 1 comprend une armature de protection 8 constituée par une couche de protection.

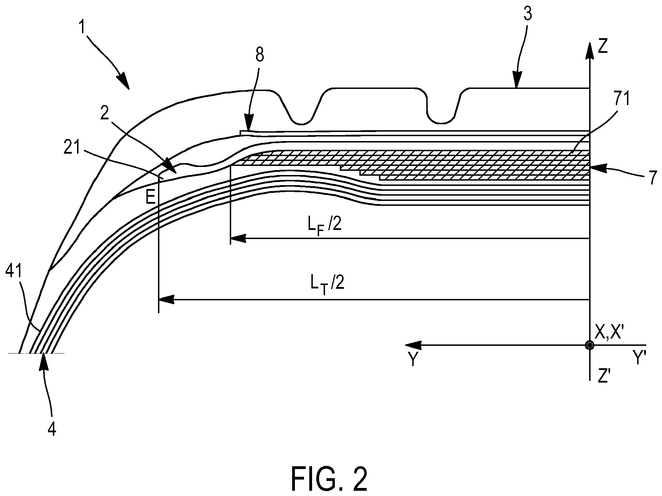

La figure 2 représente, dans un plan radial YZ passant par l'axe de rotation YY' du pneumatique, une demi-vue en coupe du sommet d'un pneumatique 1 pour avion selon l'invention, comprenant une armature de travail 2 radialement intérieure à une bande de roulement 3 et radialement extérieure à une armature de carcasse 4. Dans l'exemple présenté, l'armature de travail 2 comprend un seul binappe de travail 21, le binappe de travail ayant la plus grande largeur axiale L_{T}, mesurée entre ses deux extrémités axiales E, parmi toutes les couches de sommet. Sur la figure 2, seule une demi-largeur L_{T}/2, entre une extrémité axiale E du binappe de travail 21 et le plan équatorial XZ, est représentée. Le binappe de travail 21 est constitué au moins en partie de deux couches de travail (211, 212) radialement superposées (voir sur la figure 3). Chaque couche de travail (211, 212) comprend des renforts 5 généralement hybrides, constitués d'une combinaison d'un polyamide aliphatique et d'un polyamide aromatique, enrobés dans un matériau élastomérique, positionnés circonférentiellement selon une courbe périodique et formant, avec la direction circonférentielle XX' du pneumatique et dans le plan équatorial XZ du pneumatique, un angle au moins égal à 8° et au plus égal à 30°. En outre, radialement à l'intérieur du binappe de travail 21 ayant la plus grande largeur axiale L_{T}, le pneumatique 1 comprend une armature de frettage 7, comprenant 6 couches de frettage 71. Chaque couche de frettage 71 comprend des renforts généralement en polyamide aromatique, enrobés dans un matériau élastomérique, et formant, avec la direction circonférentielle XX' du pneumatique, un angle au plus égal à 5°. La couche de frettage 71 axialement la plus large est radialement intérieure et adjacente au binappe de travail 21, et a une largeur axiale L_{F} au moins égale à 0.8 fois la largeur axiale L_{T} dudit binappe de travail 21. Sur la figure 2, seule une demi-largeur axiale L_{F}/2, de la couche de frettage axialement la plus large est représentée. L'armature de carcasse 4 comprend une superposition radiale de couches de carcasse 41. Chaque couche de carcasse 41 comprend des renforts généralement hybrides, constitués d'une combinaison d'un polyamide aliphatique et d'un polyamide aromatique, et formant, avec la direction circonférentielle XX' du pneumatique, un angle au moins égal à 80° et au plus égal à 100°. Conformément à l'invention, le profil géométrique du binappe de travail 21 ayant la plus grande largeur axiale L_{T}, au niveau de son extrémité axiale, est moins plaqué sur l'armature de carcasse que dans le cas du pneumatique de l'état de la technique présenté sur la figure 1.

La figure 3 est une vue détaillée en coupe de l'extrémité axiale de l'armature de travail 2 d'un pneumatique pour avion 1 selon l'invention, dans un plan radial YZ passant par l'axe de rotation YY' du pneumatique. Dans l'exemple présenté, l'armature de travail 2 comprend un binappe de travail 21, dont les extrémités axiales respectives présentent des surépaisseurs. Le binappe de travail 21 est constitué de deux couches de travail (211, 212) radialement superposées en zone courante et de trois couches de travail en zone d'extrémité axiale. Chaque couche de travail (211, 212) est constituée par la juxtaposition axiale de bandelettes 9, chaque bandelette étant elle-même une juxtaposition axiale de renforts textile 5 enrobés dans un mélange élastomérique. Dans le cas présent les renforts textiles 5 sont des renforts hybrides constitués d'une combinaison d'un polyamide aliphatique et d'un polyamide aromatique. La couche de frettage 71 axialement la plus large est radialement intérieure et adjacente au binappe de travail 21 ayant la plus grande largeur axiale L_{T}, et a une largeur axiale L_{F} au moins égale à 0.8 fois la largeur axiale L_{T} du binappe de travail 21 ayant la plus grande largeur axiale L_{T}. L'armature de carcasse 4 comprend une superposition radiale de couches de carcasse 41, chaque couche de carcasse 41 comprenant des renforts hybrides constitués d'une combinaison d'un polyamide aliphatique et d'un polyamide aromatique, et formant, avec la direction circonférentielle XX' du pneumatique, un angle au moins égal à 80° et au plus égal à 100°. Conformément à l'invention, la distance D entre l'extrémité axiale E du binappe de travail 21 ayant la plus grande largeur axiale L_{T} et sa projection orthogonale I sur la couche de carcasse la plus radialement extérieure 41 est au moins égale à 7 mm et la distance D' entre le point F du binappe de travail 21 ayant la plus grande largeur axiale L_{T}, axialement intérieur à l'extrémité axiale E à une distance L égale à 25 mm, et sa projection orthogonale J sur la couche de carcasse la plus radialement extérieure 41 est au moins égale à 4 mm et au plus égale à la distance D.

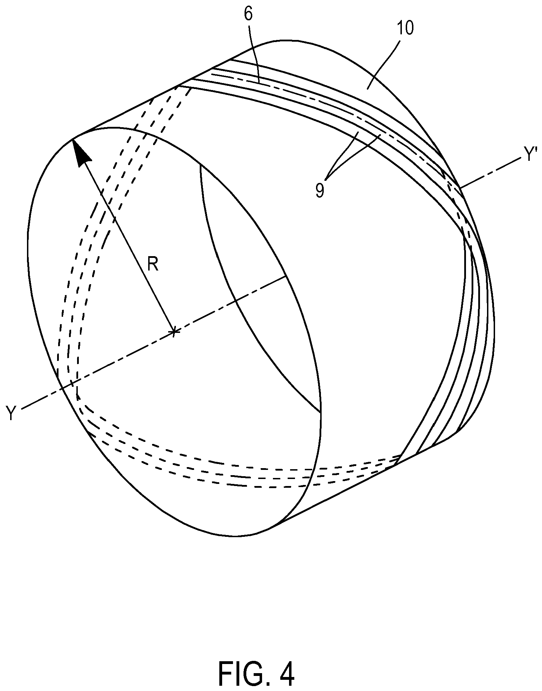

La figure 4 est une vue en perspective d'une bandelette 9, constitutive d'un binappe de travail d'un pneumatique pour avion, enroulée circonférentiellement en zigzag, selon une courbe périodique 6, sur une surface cylindrique de pose 10, de révolution autour de l'axe de rotation (YY') du pneumatique, ayant un rayon R.

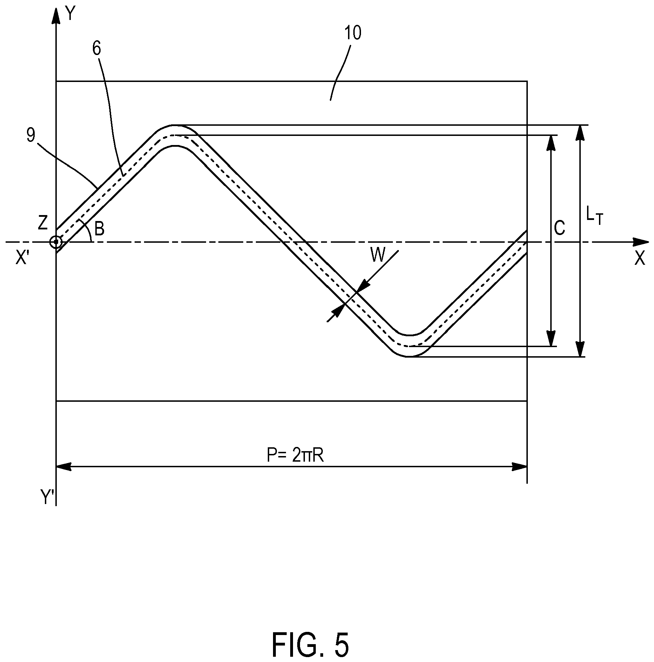

La figure 5 est une vue développée d'une bandelette 9, constitutive d'un binappe de travail d'un pneumatique selon l'invention, enroulée circonférentiellement en zigzag, selon une courbe périodique 6, après la pose d'une période. La bandelette 9 est posée sur une surface cylindrique 10 de circonférence 2ΠR, représentée sous forme développée. La ligne moyenne de la bandelette 9 suit une courbe périodique 6, formant un angle B avec la direction circonférentielle XX'. La courbe périodique 6 a une période P égale à 2ΠR et une amplitude C, qui, majorée par la largeur W de la bandelette 9, définit la largeur L_{T}=C+W du binappe de travail.

Les inventeurs ont réalisé l'invention pour un pneumatique pour avion de dimension 46X17 R 20 comprenant, radialement de l'extérieur vers l'intérieur, une armature de protection constituée d'une couche de protection dont les renforts sont métalliques, une armature de travail constituée d'un binappe de travail dont les renforts sont hybrides, et une armature de frettage constituée de six couches de frettage radialement superposées, dont les renforts sont en aramide. Les inventeurs ont comparé un pneumatique de référence et un pneumatique selon l'invention, différant uniquement par le profil géométrique du binappe de travail ayant la plus grande largeur axiale, au niveau de son extrémité axiale, ledit profil étant dit relevé pour le pneumatique selon l'invention.

Les caractéristiques géométriques des pneumatiques étudiés sont présentées dans le tableau 1 ci-dessous :

**Tableau 1**

| | Référence | Invention | Ecart |
|---|---|---|---|
| Distance D (mm) | 3 mm | 7 mm | 4 mm |
| Distance D' (mm) | 2.5 mm | 4.5 mm | 2 mm |
| Distance L (mm) | 25 mm | 25 mm | |

Les distances D, D' et L sont mesurées sur une coupe radiale du pneumatique.

La distance D est mesurée, perpendiculairement à la couche de carcasse la plus radialement extérieure, entre le point le plus radialement intérieur de l'avant-dernier renfort du binappe de travail ayant la plus grande largeur axiale, et le point le plus radialement extérieur du premier renfort rencontré de la couche de carcasse radialement la plus extérieure.

La distance D' est mesurée, perpendiculairement à la couche de carcasse radialement la plus extérieure, entre le point le plus radialement intérieur du renfort du binappe de travail ayant la plus grande largeur axiale, axialement intérieur au renfort le plus axialement extérieur du binappe de travail ayant la plus grande largeur axiale à une distance de 25 mm, et le point le plus radialement extérieur du premier renfort rencontré de la couche de carcasse radialement la plus extérieure.

La distance L est mesurée comme le rayon égal à 25 mm du cercle ayant pour centre le renfort le plus axialement extérieur du binappe de travail ayant la plus grande largeur axiale.

Les performances respectives des pneumatiques de l'état de la technique, pris comme référence, et selon l'invention ont été mesurées selon trois critères : la température au voisinage de l'extrémité axiale du binappe de travail ayant la plus grande largeur axiale, l'effort de tension maximal dans les renforts en extrémité axiale du binappe de travail ayant la plus grande largeur axiale sur un tour de roue, et le nombre maximal de cycles réalisés sans dommage au cours d'un test TSO. Les deux premiers critères sont issus d'une simulation numérique par éléments finis, dans l'hypothèse d'un roulage stationnaire du pneumatique à une vitesse de 10km/h. Les nombres de cycles sans dommage ont été déterminés par des tests TSO.

Les critères de performances des pneumatiques étudiés sont présentés dans le tableau 2 ci-dessous :

**Tableau 2**

| | Référence | Invention | Ecart |
|---|---|---|---|
| Température en extrémité axiale en roulage stationnaire à 10km/h (°C) | 85°C | 78°C | 7°C |
| Effort de tension maximal en extrémité axiale, sur un tour de roue, en roulage stationnaire à 10km/h (daN) | 16 daN | 12 daN | 4 daN |
| Nombre de cycles sur test TSO | Base 100 | 161 | 61 |

Cette invention est applicable non seulement à un pneumatique pour avion, mais aussi à tout pneumatique comprenant une armature de sommet avec au moins un binappe obtenu par un enroulement en zigzag d'une bandelette, tel que, par exemple et de façon non exhaustive, un pneumatique pour métro.

## Revendications

1. - Pneumatique (1) pour avion comprenant:
- une armature de travail (2) radialement intérieure à une bande de roulement (3) et radialement extérieure à une armature de carcasse (4),
- l'armature de travail (2) comprenant au moins un binappe de travail (21), constitué au moins en partie de deux couches de travail (211, 212) radialement superposées,
- chaque couche de travail comprenant des renforts (5), enrobés dans un matériau élastomérique, positionnés circonférentiellement selon une courbe périodique (6) et formant, avec la direction circonférentielle (XX') du pneumatique et dans le plan équatorial du pneumatique (XZ), un angle (B) au moins égal à 8° et au plus égal à 30°,
- le binappe de travail (21) ayant la plus grande largeur axiale (L_{T}) comprenant deux extrémités axiales (E), correspondant chacune au point le plus axialement extérieur et le plus radialement intérieur du binappe de travail (21),
- l'armature de carcasse (4) comprenant au moins une couche de carcasse (41) comprenant des renforts, enrobés dans un matériau élastomérique, formant, avec la direction circonférentielle (XX') du pneumatique, un angle au moins égal à 80° et au plus égal à 100°,
- une armature de frettage (7), comprenant au moins une couche de frettage (71) comprenant des renforts, enrobés dans un matériau élastomérique, formant, avec la direction circonférentielle (XX') du pneumatique, un angle au plus égal à 5°,
- **caractérisé en ce qu'**au moins une couche de frettage (71) étant radialement intérieure au binappe de travail (21) ayant la plus grande largeur axiale (L_{T}), et ayant une largeur axiale (L_{F}) au moins égale à 0.8 fois la largeur axiale (L_{T}) du binappe de travail (21) ayant la plus grande largeur axiale (L_{T}),
**en ce que** la distance D entre une extrémité axiale (E) du binappe de travail (21) ayant la plus grande largeur axiale (L_{T}) et sa projection orthogonale (I) sur la couche de carcasse la plus radialement extérieure (41) est au moins égale à 7 mm **et en ce que** la distance D' entre le point (F) du binappe de travail (21) ayant la plus grande largeur axiale (L_{T}), axialement intérieur à l'extrémité axiale (E) à une distance L égale à 25 mm, et sa projection orthogonale (J) sur la couche de carcasse la plus radialement extérieure (41) est au moins égale à 4 mm et au plus égale à la distance D.

2. - Pneumatique (1) pour avion selon la revendication 1, **dans lequel** la distance D entre une extrémité axiale (E) du binappe de travail (21) ayant la plus grande largeur axiale (L_{T}) et sa projection orthogonale (I) sur la couche de carcasse la plus radialement extérieure (41) est au plus égale à 16 mm.

3. - Pneumatique (1) pour avion selon l'une des revendications 1 ou 2, **dans lequel** les renforts (5) des couches de travail (211, 212) de tout binappe de travail (21) sont constitués d'un matériau textile.

4. - Pneumatique (1) pour avion selon l'une quelconque des revendications 1 à 3, **dans lequel** les renforts (5) des couches de travail (211, 212) d'au moins le binappe de travail (21) ayant la plus grande largeur axiale (L_{T}) sont des renforts hybrides, constitués d'une combinaison d'un polyamide aliphatique et d'un polyamide aromatique.

5. - Pneumatique (1) pour avion selon l'une quelconque des revendications 1 à 4, **dans lequel** les renforts des couches de frettage (71) sont des renforts comprenant un polyamide aromatique.

6. **-** Pneumatique (1) pour avion selon l'une quelconque des revendications 1 à 5, **dans lequel** le pneumatique (1) comprend une armature de protection (8) comprenant au moins une couche de protection.

7. - Pneumatique (1) pour avion selon la revendication 6, **dans lequel** au moins une couche de protection comprend des renforts métalliques, enrobés dans un matériau élastomérique.

## Patentansprüche

1. Flugzeugreifen (1), umfassend:
- eine Arbeitsbewehrung (2), die sich radial innerhalb eines Laufstreifens (3) und radial außerhalb einer Karkassenbewehrung (4) befindet,
- wobei die Arbeitsbewehrung (2) wenigstens eine Arbeitsdoppellage (21) umfasst, die wenigstens teilweise aus zwei radial übereinander angeordneten Arbeitslagen (211, 212) besteht,
- wobei jede Arbeitslage Festigkeitsträger (5) umfasst, die in ein elastomeres Material eingebettet sind, in Umfangsrichtung entlang einer periodischen Kurve (6) positioniert sind und mit der Umfangsrichtung (XX') des Reifens und in der Äquatorialebene des Reifens (XZ) einen Winkel (B) bilden, der mindestens gleich 8° und höchstens gleich 30° ist,
- wobei die Arbeitsdoppellage (21) mit der größten axialen Breite (L_{T}) zwei axiale Enden (E) umfasst, die jeweils dem axial äußersten und dem radial innersten Punkt der Arbeitsdoppellage (21) entsprechen,
- wobei die Karkassenbewehrung (4) wenigstens eine Karkassenlage (41) umfasst, die Festigkeitsträger umfasst, die in ein elastomeres Material eingebettet sind, wobei sie mit der Umfangsrichtung (XX') des Reifens einen Winkel bilden, der mindestens gleich 80° und höchstens gleich 100° ist,
- eine Versteifungsbewehrung (7), die wenigstens eine Versteifungsschicht (71) umfasst, die Festigkeitsträger umfasst, die in ein elastomeres Material eingebettet sind, wobei sie mit der Umfangsrichtung (XX') des Reifens einen Winkel bilden, der höchstens gleich 5° ist,
- **dadurch gekennzeichnet, dass** wobei sich wenigstens eine Versteifungsschicht (71) radial innerhalb der Arbeitsdoppellage (21) mit der größten axialen Breite (L_{T}) befindet und eine axiale Breite (L_{F}) aufweist, die wenigstens gleich dem 0,8-fachen der axialen Breite (L_{T}) der Arbeitsdoppellage (21) mit der größten axialen Breite (L_{T}) ist,
dadurch, dass der Abstand D zwischen einem axialen Ende (E) der Arbeitsdoppellage (21) mit der größten axialen Breite (L_{T}) und seiner orthogonalen Projektion (I) auf die radial äußerste Karkassenlage (41) wenigstens gleich 7 mm ist, und dadurch, dass der Abstand D' zwischen dem Punkt (F) der Arbeitsdoppellage (21) mit der größten axialen Breite (L_{T}), der sich in einem Abstand L, der gleich 25 mm ist, axial innerhalb des axialen Endes (E) befindet, und seiner orthogonalen Projektion (J) auf die radial äußerste Karkassenlage (41) wenigstens gleich 4 mm und höchstens gleich dem Abstand D ist.

2. Flugzeugreifen (1) nach Anspruch 1, wobei der Abstand D zwischen einem axialen Ende (E) der Arbeitsdoppellage (21) mit der größten axialen Breite (L_{T}) und seiner orthogonalen Projektion (I) auf die radial äußerste Karkassenlage (41) höchstens gleich 16 mm ist.

3. Flugzeugreifen (1) nach einem der Ansprüche 1 oder 2, wobei die Festigkeitsträger (5) der Arbeitslagen (211, 212) jeder Arbeitsdoppellage (21) aus einem textilen Material bestehen.

4. Flugzeugreifen (1) nach einem der Ansprüche 1 bis 3, wobei die Festigkeitsträger (5) der Arbeitslagen (211, 212) wenigstens der Arbeitsdoppellage (21) mit der größten axialen Breite (L_{T}) hybride Festigkeitsträger sind, die aus einer Kombination eines aliphatischen Polyamids und eines aromatischen Polyamids bestehen.

5. Flugzeugreifen (1) nach einem der Ansprüche 1 bis 4, wobei die Festigkeitsträger der Versteifungsschichten (71) Festigkeitsträger sind, die ein aromatisches Polyamid umfassen.

6. Flugzeugreifen (1) nach einem der Ansprüche 1 bis 5, wobei der Reifen (1) eine Schutzbewehrung (8) umfasst, die wenigstens eine Schutzlage umfasst.

7. Flugzeugreifen (1) nach Anspruch 6, wobei wenigstens eine Schutzlage metallische Festigkeitsträger umfasst, die in ein elastomeres Material eingebettet sind.

## Claims

1. - Aeroplane tyre (1) comprising:
- a working reinforcement (2) radially on the inside of a tread (3) and radially on the outside of a carcass reinforcement (4),
- the working reinforcement (2) comprising at least one working biply (21) consisting at least in part of two radially superposed working layers (211, 212),
- each working layer comprising reinforcers (5) coated in an elastomeric material, positioned circumferentially along a periodic curve (6) and forming, with the circumferential direction (XX') of the tyre and in the equatorial plane of the tyre (XZ), an angle (B) at least equal to 8° and at most equal to 30°,
- the working biply (21) of greatest axial width (L_{T}) comprising two axial ends (E) each one corresponding to the axially outermost and radially innermost point of the working biply (21),
- the carcass reinforcement (4) comprising at least one carcass layer (41) comprising reinforcers which are coated in an elastomeric material, forming, with the circumferential direction (XX') of the tyre, an angle at least equal to 80° and at most equal to 100°,
- a hoop reinforcement (7) comprising at least one hooping layer (71) comprising reinforcers which are coated in an elastomeric material, forming, with the circumferential direction (XX') of the tyre, an angle at most equal to 5°,
- at least one hooping layer (71) **characterized in that** radially on the inside of the working biply (21) of greatest axial width (L_{T}), and having an axial width (L_{F}) at least equal to 0.8 times the axial width (L_{T}) of the working biply (21) of greatest axial width (L_{T}),
**in that** the distance D between an axial end (E) of the working biply (21) of greatest axial width (L_{T}) and its orthogonal projection (I) onto the radially outermost carcass layer (41) is at least equal to 7 mm **and in that** the distance D' between the point (F) of the working biply (21) of greatest axial width (L_{T}), axially on the inside of the axial end (E) at a distance L equal to 25 mm, and its orthogonal projection (J) onto the radially outermost carcass layer (41) is at least equal to 4 mm and at most equal to the distance D.

2. - Aeroplane tyre (1) according to Claim 1, **in which** the distance D between an axial end (E) of the working biply (21) of greatest axial width (L_{T}) and its orthogonal projection (I) onto the radially outermost carcass layer (41) is at most equal to 16 mm.

3. - Aeroplane tyre (1) according to either of Claims 1 and 2, **in which** the reinforcers (5) of the working layers (211, 212) of any working biply (21) are made of a textile material.

4. - Aeroplane tyre (1) according to any one of Claims 1 to 3, **in which** the reinforcers (5) of the working layers (211, 212) of at least the working biply (21) of greatest axial width (L_{T}) are hybrid reinforcers made up of a combination of an aliphatic polyamide and an aromatic polyamide.

5. - Aeroplane tyre (1) according to any one of Claims 1 to 4, **in which** the reinforcers of the hooping layers (71) are reinforcers containing an aromatic polyamide.

6. - Aeroplane tyre (1) according to any one of Claims 1 to 5, **in which** the tyre (1) comprises a protective reinforcement (8) comprising at least one protective layer.

7. - Aeroplane tyre (1) according to Claim 6, **in which** at least one protective layer comprises metal reinforcers coated in an elastomeric material.
